# EUROPÄISCHE PATENTANMELDUNG

(11) **EP 2 562 105 A1**
(43) Veröffentlichungstag der Anmeldung: **27.02.2013**
(21) Anmeldenummer: 12178142.1
(22) Anmeldetag: 27.07.2012
(51) Int. Cl.: B65G 47/91

(54) **Bernoulli-Greifer mit vollflächiger Werkstückanlage**

(30) Priorität: 24.08.2011 DE 102011111768
(71) Anmelder: ROBERT BOSCH GMBH, 70442 Stuttgart (DE)
(72) Erfinder: Michalkowski, Dieter, 72770 Reutlingen (DE); Bader, Manfred, 01762 Schmiedeberg (DE)
(74) Vertreter: Maiß, Harald

(57) **Zusammenfassung**

Die Erfindung betrifft einen Greifer (10) mit einer Greiffläche (51), welche zur Anlage mit einem zu greifenden Körper (11) ausgebildet ist, wobei der Greifer (10) einen Luftanschluss (31) zum Zuführen von Druckluft aufweist, wobei der Luftanschluss (31) über eine Druckleitung (21) derart mit der Greiffläche verbunden ist, dass die Druckluft beschleunigt wird, wenn der zu greifende Körper (11) an der Greiffläche (51) anliegt, wobei die Druckluft in die Umgebung entweichen kann. Erfindungsgemäß wird die Greiffläche (51) von einer luftdurchlässigen, flexiblen Greifplatte (50) gebildet, welche abschnittsweise in einem Verbindungsbereich (14) fest mit einem Grundkörper (20) verbunden ist, wobei sich zwischen der Greifplatte (50) und dem Grundkörper (20) ein enger Spalt (13) ausbilden kann, welcher mit der Druckleitung (21) verbunden ist, so dass sich in dem Spalt (13) ein Unterdruck ausbilden kann.

## Beschreibung

Die Erfindung betrifft einen Greifer gemäß dem Oberbegriff von Anspruch 1.

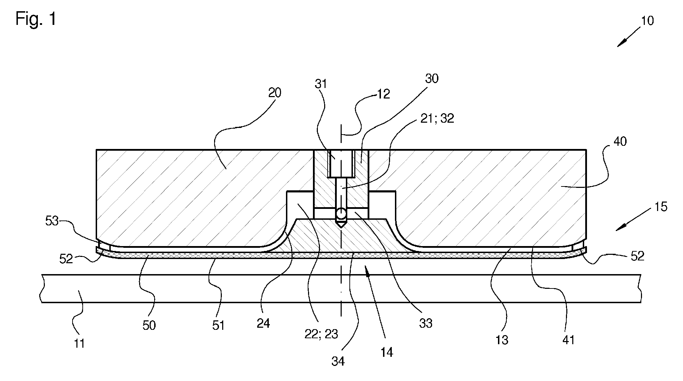

Aus der DE 15 31 192 A1 ist ein so genannter Bernoulli-Greifer bekannt. Gemäß der Fig. 1 der DE 15 31 192 A1 umfasst der Greifer eine Platte 9, an der eine ebene Greiffläche ausgebildet ist. An der Platte ist ein Druckluftanschluss 11 in Form eines Rohres vorgesehen, welches eine Druckleitung begrenzt, die mit der Greiffläche verbunden ist. An den Druckanschluss wird üblicherweise Druckluft angeschlossen, welche unter einem Druck oberhalb des Umgebungsdrucks steht. Wird nun ein Greifkörper 14, beispielsweise eine Glasplatte, an die Greiffläche angenährt, so bildet sich zwischen der Greiffläche und dem Greifkörper ein enger Spalt 12 aus, dessen Querschnittsfläche kleiner als die Querschnittsfläche der Druckleitung ist. Daher wird die Druckluft in dem engen Spalt beschleunigt. In der Folge sinkt der Druck in dem engen Spalt aufgrund des Bernoulli-Effekts ab, so dass der zu greifende Körper durch den Umgebungsdruck gegen die Greiffläche gedrückt wird. Der zu greifende Körper kann damit durch den Greifer angehoben werden, wobei zwischen dem zu greifenden Körper und der Greiffläche ein Luftspalt verbleibt. Bei der Grundausführung des Bernoulli-Greifers wird der zu greifende Körper also berührungslos gegriffen.

Dies hat jedoch den Nachteil, dass keine Querkräfte, also Kräfte die parallel zur Greiffläche wirken, vom Greifer auf den zu greifenden Körper übertragen werden können. Bei der DE 15 31 192 A1 sind deshalb Abstandhalter 13 vorgesehen, an denen der zu greifende Körper berührend anliegt, wobei zwischen dem zu greifenden Körper und der Greiffläche immer noch ein genügend großer Spalt zum Ausströmen der Druckluft verbleibt. Durch die Reibkräfte zwischen den Abstandhaltern und dem zu greifenden Körper können nun Querkräfte übertragen werden. Der Nachteil dieser Ausführungsform besteht jedoch darin, dass der Unterdruck zwischen den Abstandhaltern eine erhebliche Biegebeanspruchung des zu greifenden Körpers bewirkt. Sofern der zu greifende Körper in Form einer dünnen Glasplatte ausgebildet ist, kann diese sogar brechen.

Aus der EP 0 260 128 B1 ist ein weiterer Greifer bekannt. Dieser arbeitet jedoch nicht nach dem Bernoulli-Prinzip, sondern nach dem Vakuumprinzip, d.h. es ist eine Vakuumpumpe vorgesehen, welche einen Unterdruck erzeugt, mit dem der zu greifende Körper an die Greiffläche gesaugt wird. Die Greiffläche ist mit einer Schwammschicht mit durchgehenden Luftblasen versehen, so dass der zu greifende Körper vollflächig an der Greiffläche anliegt, wobei keine Biegekräfte auf diesen einwirken. Der Nachteil dieses Greifers besteht darin, dass eine gesonderte Vakuumpumpe erforderlich ist. Bei dem obigen Bernoulli-Greifer kann dagegen Druckluft verwendet werden, die meist ohnehin für den Antrieb von Pneumatikzylindern o. ä. zur Verfügung steht.

Die Aufgabe der Erfindung besteht darin, einen Greifer bereitzustellen, welcher mit Druckluft betrieben werden kann, wobei der Greifer Querkräfte auf den zu greifenden Körper übertragen kann, wobei Biegebeanspruchungen des zu greifenden Körpers vermieden werden.

Gemäß dem selbständigen Anspruch wird diese Aufgabe dadurch gelöst, dass die Greiffläche von einer luftdurchlässigen, flexiblen Greifplatte gebildet wird, welche abschnittsweise in einem Verbindungsbereich fest mit einem Grundkörper verbunden ist, wobei sich zwischen der Greifplatte und dem Grundkörper ein enger Spalt ausbilden kann, welcher mit der Druckleitung verbunden ist, so dass sich in dem Spalt ein Unterdruck ausbilden kann. In dem engen Spalt bildet sich aufgrund des Bernoulli-Effekts ein Unterdruck aus. Dieser Unterdruck wird über die luftdurchlässige Greifplatte auf den zu greifenden Körper übertragen, so dass dieser von dem Greifer angesaugt wird. Der zu greifende Körper liegt dabei im Wesentlichen vollflächig auf der Greifplatte auf, so dass keine Biegekräfte auf diesen einwirken. Gleichzeitig können über die Reibung zwischen dem zu greifenden Körper und der Greifplatte Querkräfte auf den zu greifenden Körper übertragen werden. Die Greifplatte ist hierfür abschnittsweise fest mit dem Grundkörper des Greifers verbunden. Die genannte feste Verbindung bewirkt außerdem, dass die Greifplatte vom Grundkörper gehalten wird, auch wenn der Greifer außer Benutzung ist.

In den abhängigen Ansprüchen sind vorteilhafte Weiterbildungen und Verbesserungen der Erfindung angegeben.

Die Greifplatte kann aus einem porösen Material, vorzugsweise einem offenzelligen Schaumstoff oder einem Faservlies, bestehen. Die Greifplatte kann damit besonders kostengünstig hergestellt werden. Bei den bevorzugten Materialien kann das Ausmaß der Luftdurchlässigkeit so eingestellt werden, dass sich ein optimaler Ansaugeffekt ergibt. Hierfür kann beispielsweise die Größe der Schaumstoffporen oder die Faserdichte des Faservlieses entsprechend gewählt werden.

Die Greifplatte kann in Form einer Folie oder eines dünnen Blechs ausgebildet sein, wobei sie eine Vielzahl von Löchern aufweist. Die Löcher durchsetzen die Greifplatte vorzugsweise senkrecht zur Greiffläche, wobei Sie einen Durchmesser von 0,01 mm bis 0,3 mm aufweisen. Über die Anzahl der Löcher pro Flächeneinheit kann die Luftdurchlässigkeit der Greifplatte eingestellt werden. Die vorgeschlagene Greifplatte ist in solchen Einsatzfällen vorteilhaft, in denen eine geringe Druckelastizität der Greifplatte gewünscht ist.

Der Verbindungsbereich kann mittig an der Greifplatte angeordnet sein. Die ausströmende Luft wird in der Regel radial außen am Greifer in die Umgebung abgeleitet. Ein Verbindungsbereich zwischen Greifplatte und Grundkörper, der in der Mitte des Greifers angebracht ist, versperrt daher nicht den Strömungsweg der Druckluft. Darüber hinaus kann der vorgeschlagene Greifer besonders leicht rotationssymmetrisch ausgebildet werden, wie dies für eine optimale Unterdruckverteilung an der Greiffläche vorteilhaft ist.

Die Greifplatte kann im Verbindungsbereich luftundurchlässig sein. In dem Verbindungsbereich ist kein Spalt zwischen der Greifplatte und dem Grundkörper vorhanden, so dass der Unterdruck erzeugende Bernoulli-Effekt dort nicht wirken kann. Dementsprechend würde die Druckluft durch eine luftdurchlässige Greifplatte zu dem zu greifenden Körper hin entweichen können. Hierdurch würde Druckluft nutzlos verloren gehen, wobei gleichzeitig die Greifkraft des Greifers negativ beeinflusst werden würde. Demnach ist es vorteilhaft, den Verbindungsbereich zwischen Greifplatte und Grundkörper luftundurchlässig auszuführen.

Die Druckleitung kann abschnittsweise im Verbindungsbereich angeordnet sein, wobei die Druckluft radial nach außen durch den engen Spalt strömen kann. Hierdurch kann eine rotationssymmetrische Strömung der Druckluft an der Greifplatte erreicht werden, welche einen bestmöglichen Ansaugeffekt bei geringst möglichem Druckluftverbrauch bietet.

Die Greifplatte kann derart an den Grundkörper angepasst sein, dass sich der enge Spalt radial außen am Greifer vergrößert. Hierdurch wird die Strömungsgeschwindigkeit der Druckluft am Rand des Greifers gezielt herabgesetzt, so dass, die Druckluft, welche in die Umgebung entweicht wenig Luftwirbel und somit geringe Geräusche verursacht. Weiter verursacht die in die Umgebung entweichende Druckluft weniger Störungen der Druckluftströmung im engen Spalt an der Greiffläche, so dass sich ein optimaler Ansaugeffekt ergibt.

Die Greifplatte kann radial außen an mehreren gesonderten Haltestellen fest mit dem Grundkörper verbunden sein, wobei zwischen den Haltestellen ein freier Strömungsweg für die Druckluft verbleibt. Hierdurch soll verhindert werden, dass die Greifplatte aufgrund ihrer Flexibilität und ihres Eigengewichts vom Grundkörper herabhängt, wenn dieser nicht in Betrieb ist. Durch die Haltestellen befindet sich die Greifplatte von vorne herein so nahe an der Greifplatte, dass immer ein enger Spalt vorhanden ist. Sobald dem Greifer Druckluft zugeführt wird, wird die Greifplatte also sicher an den Grundkörper angesaugt. Zwischen den Haltestellen muss genügend Freiraum verbleiben, damit die Druckluft in die Umgebung entweichen kann.

Die Greiffläche kann im Bereich der Haltestellen so ausgebildet sein, dass sie nicht an dem zu greifenden Körper anliegt. Hierdurch soll verhindert werden, dass der zu greifende Körper an den Haltestellen fest abgestützt wird, da der zwischen den Haltestellen wirkende Unterdruck eine Verbiegung des zu greifenden Körpers bewirken könnte. Dies soll durch die Erfindung gerade vermieden werden.

Die Druckleitung kann derart gebogen oder geneigt ausgebildet sein, dass die Druckluft im Wesentlichen parallel zur Greiffläche in den engen Spalt einströmt. Die Druckluftströmung muss parallel zur Greiffläche ausgerichtet werden, damit sich der gewünschte Ansaugeffekt einstellt. Hierbei sollen möglichst geringe Störungen der Strömung durch Verwirbelungen o. ä. entstehen. Es ist daher vorteilhaft, die Druckleitung von vorneherein so zu führen, dass die Druckluft durch die Druckleitung in die gewünschte Richtung umgelenkt wird. Hierdurch wird überdies erreicht, dass der Greifer den zu greifenden Körper ansaugt, ohne dass der Greifer gegen den zu greifenden Körper gedrückt werden muss.

Die Druckleitung kann so ausgebildet sein, dass die Druckluft spiralförmig in den engen Spalt einströmt. Hierfür können beispielsweise spiralförmig verlaufende Leitbleche in der Druckleitung vorgesehen sein. Alternativ kann sich die Druckleitung auch in mehrere spiralförmig verlaufende Leitungsabschnitte verzweigen. Hierdurch ergibt sich in dem engen Spalt eine spiralförmige Strömung, so dass die Druckluft nicht auf dem kürzesten Wege aus dem Greifer entweicht. In der Folge wird der Druckluftverbrauch des Greifers herabgesetzt.

Die Greiffläche kann eben ausgebildet sein, wobei sie am radial äußeren Rand konvex gekrümmt ist. Durch einen derartigen Greifer können ebene Körper, insbesondere ebene Platten gegriffen werden. Durch die konvexe Krümmung der Greiffläche am Rand wird die in die Umgebung entweichende Druckluft vom zu greifenden Körper weg geleitet, so dass sie den Ansaugeffekt des Greifers nicht stört.

Die Erfindung wird im Folgenden anhand der beigefügten Zeichnung näher erläutert. Es stellt dar:
Fig. 1 einen Querschnitt eines erfindungsgemäßen Greifers.

Fig. 1 zeigt einen erfindungsgemäßen Greifer 10 im Querschnitt. Der Greifer 10 ist im Wesentlichen rotationssymmetrisch bezüglich der Symmetrieachse 12 ausgebildet, so dass der Grundkörper 20 die Form einer kreisrunden Platte aufweist. Der Grundkörper 20 ist aus einem Außen- und einem Innenteil 40; 30 zusammengesetzt, die zusammen die Druckleitung 21 im Greifer begrenzen. Der Luftanschluss 31 in Form eines Innengewindes ist an dem Innenteil 30 entlang der Symmetrieachse 12 angeordnet. Die Druckleitung 21 wird von einer ersten und mehreren zweiten Bohrungen 32; 33 und einem Ringkanal 22 gebildet. Die erste Bohrung 32 verläuft entlang der Symmetrieachse 12, wobei beispielsweise vier im Abstand von 90° angeordnete zweite Bohrungen 33 senkrecht in die erste Bohrung 32 einmünden. Die zweiten Bohrungen 33 münden außerdem in den Ringkanal 22, der vom Innen- und vom Außenteil 30; 40 begrenzt wird. Der Ringkanal 22 setzt sich aus einem Verteilabschnitt 23 und einem Düsenabschnitt 24 zusammen. Mit dem Verteilabschnitt 23, welcher eine vergleichsweise große rechteckige Querschnittsfläche aufweist, wird die zugeführte Druckluft im Wesentlichen gleichförmig über den gesamten Umfang des Düsenabschnitts 24 verteilt, so dass über den gesamten Umfang gleichförmige Einströmbedingungen herrschen.

Der Düsenabschnitt 24 weist eine sich verengende Querschnittsform auf, so dass die Druckluft bereits im Düsenabschnitt 24 beschleunigt wird, ehe sie in den engen Spalt 13 zwischen der Greifplatte 50 und dem Grundkörper 20 einströmt. Der Düsenabschnitt 24 verläuft darüber hinaus kreisförmig gebogen, damit die Druckluftströmung parallel zur ebenen Greiffläche 51 umgelenkt wird. Hierbei ist anzumerken, dass der enge Spalt 13 in Fig. 1 der Übersichtlichkeit halber stark übertrieben dargestellt ist. Der enge Spalt 13 hat je nach Gewicht des zu greifenden Körpers eine Breite in der Größenordnung von etwa 0,1 mm, wobei der enge Spalt 13 umso schmäler ist, je schwerer der zu greifende Körper 11 ist. Der Düsenabschnitt 24 kann auch in Form von mehreren gesonderten, spiralförmig verlaufenden Kanälen ausgebildet sein, damit die Druckluft spiralförmig in den engen Spalt 13 einströmt.

Die Greifplatte 50 ist in Form einer ebenen Schaumstoffplatte ausgeführt, die offenzellig ist, d. h. dass die verschiedenen Poren oder Zellen des Schaumstoffs untereinander verbunden sind, so dass das Schaumstoffmaterial luftdurchlässig ist. Die Greifplatte 50 ist mit dem Innenteil 30 des Grundkörpers fest verbunden, indem sie auf dessen ebene Verbindungsfläche 34 aufgeklebt ist. Durch diese Verbindung wird außerdem erreicht, dass in diesem Bereich keine Druckluft durch die Greifplatte 50 hindurch entweichen kann. Es ist vielmehr sichergestellt, dass die gesamte Druckluftmenge in den engen Spalt 13 einströmt. Der enge Spalt 13 bildet sich zwischen dem Außenteil 40 des Grundkörpers 20 und der Greifplatte 50 aus. Die entsprechende Spaltfläche 41 des Außenteils 40 ist in diesem Bereich eben ausgeführt, wobei sie am radial äußeren Rand 15 konvex gewölbt ist. Am konvex gebogenen äußeren Rand 15 sind mehrere gesonderte Haltestellen 52 vorgesehen, die gleichmäßig verteilt über den Umfang des Außenteils 40 angeordnet sind. An den Haltestellen 42 ist die Greifplatte 50 über Abstandhalter 53 mit dem Außenteil 40 verklebt. Die Abstandhalter 53 sind so ausgebildet, dass sich der enge Spalt 13 nach radial außen vergrößert, wobei gleichzeitig die Greifplatte 50 im Bereich der Haltestellen 52 nicht an dem zu greifenden Körper 11 in Form einer ebenen Glasplatte anliegt.

Wenn dem Greifer 10 Druckluft über den Luftanschluss 31 zugeführt wird, wird diese in dem Düsenabschnitt 24 beschleunigt, so dass sich in dem engen Spalt 13 aufgrund des Bernoulli-Effekts ein Unterdruck ausbildet. Die Druckluft entweicht am radial äußeren Rand 15 aus dem Greifer 10, wobei sie leicht nach oben abgelenkt wird. Gleichzeitig saugt der Unterdruck durch den offenzelligen Schaumstoff hindurch Luft aus der Umgebung an. Wird nun der zu greifende Körper 11, beispielsweise eine ebene Glasplatte, in die Nähe der ebenen Greiffläche 51 gebracht, so wird er angesaugt, bis er an der ebenen Greiffläche 51 anliegt. Hierbei ist anzumerken, dass die Glasplatte im Bereich des engen Spaltes 13 vollflächig an der Greiffläche anliegt. Der Verbindungsbereich 14 wurde dagegen so gestaltet, dass dort in jedem Betriebszustand des Greifers 10 nur eine geringe Anpresskraft an der Greiffläche herrscht, so dass unerwünschte Biegebeanspruchungen der Glasplatte 11 ausgeschlossen sind. Dies kann beispielsweise dadurch erreicht werden, dass die ebene Verbindungsfläche 34 am Innenteil 30 gegenüber der Spaltfläche 41 am Außenteil 40 minimal nach oben versetzt ist.

### Bezugszeichenliste

- 10: Greifer
- 11: zu greifender Körper
- 12: Symmetrieachse
- 13: enger Spalt
- 14: Verbindungsbereich
- 15: äußerer Rand

- 20: Grundkörper
- 21: Druckleitung
- 22: Ringkanal
- 23: Verteilabschnitt
- 24: Düsenabschnitt

- 30: Innenteil
- 31: Luftanschluss
- 32: erste Bohrung
- 33: zweite Bohrung
- 34: Verbindungsfläche

- 40: Außenteil
- 41: Spaltfläche

- 50: Greifplatte
- 51: Greiffläche
- 52: Haltestelle
- 53: Abstandhalter

## Patentansprüche

1. Greifer (10) mit einer Greiffläche (51), welche zur Anlage mit einem zu greifenden Körper (10) ausgebildet ist, wobei der Greifer (10) einen Luftanschluss (31) zum Zuführen von Druckluft aufweist, wobei der Luftanschluss (31) über eine Druckleitung (21) derart mit der Greiffläche verbunden ist, dass die Druckluft beschleunigt wird, wenn der zu greifende Körper (11) an der Greiffläche (51) anliegt, wobei die Druckluft in die Umgebung entweichen kann,
**dadurch gekennzeichnet, dass** die Greiffläche (51) von einer luftdurchlässigen, flexiblen Greifplatte (50) gebildet wird, welche abschnittsweise in einem Verbindungsbereich (14) fest mit einem Grundkörper (20) verbunden ist, wobei sich zwischen der Greifplatte (50) und dem Grundkörper (20) ein enger Spalt (13) ausbilden kann, welcher mit der Druckleitung (21) verbunden ist, so dass sich in dem Spalt (13) ein Unterdruck ausbilden kann.

2. Greifer nach Anspruch 1,
**dadurch gekennzeichnet, dass** die Greifplatte (50) aus einem porösen Material, vorzugsweise einem offenzelligen Schaumstoff oder einem Faservlies, besteht.

3. Greifer nach Anspruch 1,
**dadurch gekennzeichnet, dass** die Greifplatte (50) in Form einer Folie oder eines dünnen Blechs ausgebildet ist, wobei sie eine Vielzahl von Löchern aufweist.

4. Greifer nach einem der vorstehenden Ansprüche,
**dadurch gekennzeichnet, dass** der Verbindungsbereich (14) mittig an der Greifplatte (50) angeordnet ist.

5. Greifer nach Anspruch 4,
**dadurch gekennzeichnet, dass** die Greifplatte (50) im Verbindungsbereich (14) luftundurchlässig ist.

6. Greifer nach Anspruch 4 oder 5,
**dadurch gekennzeichnet, dass** die Druckleitung (21) abschnittsweise im Verbindungsbereich (14) angeordnet ist, wobei die Druckluft radial nach außen durch den engen Spalt (13) strömen kann.

7. Greifer nach einem der Ansprüche 4 bis 6,
**dadurch gekennzeichnet, dass** die Greifplatte (50) derart an den Grundkörper (20) angepasst ist, dass sich der enge Spalt (13) radial außen am Greifer (10) vergrößert.

8. Greifer nach einem der Ansprüche 4 bis 7,
**dadurch gekennzeichnet, dass** die Greifplatte (50) radial außen an mehreren gesonderten Haltestellen (52) fest mit dem Grundkörper (20) verbunden ist, wobei zwischen den Haltestellen (52) ein freier Strömungsweg für die Druckluft verbleibt.

9. Greifer nach Anspruch 8,
**dadurch gekennzeichnet, dass** die Greiffläche (51) im Bereich der Haltestellen (52) so ausgebildet ist, dass sie nicht an dem zu greifenden Körper (11) anliegt.

10. Greifer nach einem der vorstehenden Ansprüche,
**dadurch gekennzeichnet, dass** die Druckleitung (21) derart gebogen oder geneigt ausgebildet ist, dass die Druckluft im Wesentlichen parallel zur Greiffläche (51) in den engen Spalt (13) einströmt.

11. Greifer nach Anspruch 10,
**dadurch gekennzeichnet, dass** die Druckleitung (21) so ausgebildet ist, dass die Druckluft spiralförmig in den engen Spalt (13) einströmt.

12. Greifer nach einem der vorstehenden Ansprüche,
**dadurch gekennzeichnet, dass** die Greiffläche (51) eben ausgebildet ist, wobei sie am radial äußeren Rand (15) konvex gekrümmt ist.
